# EUROPEAN PATENT APPLICATION

(11) **EP 4 782 476 A1**
(43) Date of publication of application: **29.07.2026**
(21) Application number: 24822772.0
(22) Date of filing: 14.06.2024
(51) Int. Cl.: C08G 63/688

(54) **RECYCLABLE SKIN FOR INTERIOR OF VEHICLE AND VEHICLE INTERIOR COMPONENT COMPRISING SAME**

(30) Priority: 16.06.2023 CN 202310721062
(71) Applicant: Yanfeng International Automotive Technology Co., Ltd., Shanghai 201306 (CN)
(72) Inventor: CHU, Yeqian, Shanghai 201315 (CN); SUN, Jie, Shanghai 201315 (CN); JIANG, Minjie, Shanghai 201315 (CN); WANG, Liyong, Shanghai 201315 (CN)
(74) Representative: Meissner Bolte Partnerschaft mbB
(86) International application number: PCT/CN2024/099139
(87) International publication number: WO 2024/255824

(57) **Abstract**

The present invention relates to a recyclable skin for a vehicle interior, comprising a surface layer. The surface layer is formed from a material comprising a thermoplastic copolyester elastomer by means of a calendering and/or casting process, wherein the thermoplastic copolyester elastomer forming the surface layer comprises hard segments and soft segments. The recyclable skin for a vehicle interior of the present invention can be recycled as a whole without disassembly, offering advantages in environmental protection and promising market application prospects.

## Description

This patent application claims priority of the Chinese patent application Ser. No. 202310721062.0, filed on June 16, 2023, and titled "A recyclable skin for vehicle interiors and a vehicle interior component comprising the recyclable skin", the entire content of the aforementioned application is hereby expressly incorporated herein by reference.

### TECHNICAL FIELD

The present invention relates to the field of recyclable skin materials for vehicle interiors, and more particularly relates to a recyclable skin for vehicle interiors and to a vehicle interior component comprising the recyclable skin.

### BACKGROUND ART

In recent years, environmental protection and sustainable development are key issues of public concern. With increasingly stringent requirements regarding carbon emissions, the use of recyclable materials and the recycling of products at the end of their service life have become effective and practical approaches to reducing overall carbon emissions.

Conventional skins for vehicle interior components are typically formed from a combination of different polymeric materials, for example polyvinyl chloride (PVC), polyurethane (PU), and polyethylene terephthalate (PET). The foamed layers also contained in these skins are typically formed from polyurethane foam, which is a non-recyclable thermosetting material. Consequently, when existing products reach the end of their service life and need to be recycled, the various layers of material must first be separated. However, because the actual separation process is often difficult to complete or cannot be fully accomplished, the subsequent recycling process cannot be performed.

CN 113135003 A relates to a breathable automotive seat fabric, which achieves bidirectional breathability in the fabric body by installing corresponding breathable components on the upper and lower surfaces of the base layer, thereby enhancing overall breathability and making it suitable for use in various operating environments. By incorporating a silicone layer between the first and second breathable layers, the fabric's elastic strength is improved, and its resilience is enhanced. Additionally, by uniformly perforating the silicone layer with through-holes, gas flow is directed, enhancing the fabric's permeability and ensuring a cool and comfortable experience for the user. Furthermore, with the assistance of protective components and the inclusion of an abrasion-resistant layer, the fabric's abrasion resistance is improved, thereby reducing maintenance costs for the user. Although such structures can improve comfort, the materials involved are still heterogeneous and do not address the problem of integral recyclability of vehicle interior skins.

### SUMMARY OF THE INVENTION

To address technical issues in existing interior trim materials used in vehicles-such as the use of non-recyclable materials and the inability to recycle them at the end of their service life-this invention provides a recyclable skin used in vehicles that can be recycled as a whole without disassembly, offering environmental benefits and promising market prospects.

In one aspect, the present application relates to a recyclable skin for vehicle interiors comprising a surface layer; the surface layer is formed by a calendering and/or casting process from a material comprising a thermoplastic copolyester elastomer, wherein the thermoplastic copolyester elastomer forming the surface layer comprises a hard segment and a soft segment, the hard segment of the thermoplastic copolyester elastomer forming the surface layer comprising poly (butylene terephthalate), poly (ethylene terephthalate), poly (trimethylene terephthalate), poly (trimethylene terephthalate)/poly (butylene terephthalate), poly (2,6-naphthalate), poly (trimethylene terephthalate), poly (ethylene terephthalate)/polybutylene terephthalate copolymers, poly (dimethyl terephthalate/m-xylylene)/1,4-butanediol copolymers, poly (2,5-furan dicarboxylate), poly (2,5-furandicarboxylic acid) propylene glycol ester, poly (2,5-furandicarboxylate), poly (2,5-furan dicarboxylate), or a combination thereof; Preferably, the method comprises polybutylene terephthalate, poly (2,5-furandicarboxylate), or a combination thereof; The soft segment of the thermoplastic copolyester elastomer forming the surface layer comprises polyethylene glycol, polybutylene glycol, polycaprolactone, polyethylene glycol, fatty acid dimer diol, polytetramethylene ether, ethylene oxide-propylene oxide copolymer bisphenol A ether, polypropylene glycol, polylactide, polyglycolide, or a combination thereof; preferably, polyethylene glycol, polycaprolactone, polytetramethylene ether, or a combination thereof.

In one embodiment, the recyclable skin of the present invention further comprises a foam layer formed from a material comprising a thermoplastic copolyester elastomer by a foaming process.

In one embodiment, the recyclable skin of the present invention further comprises a fabric layer; the fabric layer is made of fibers formed from a thermoplastic polyester material, wherein the fibers formed from the thermoplastic polyester material comprise thermoplastic polyester fibers, thermoplastic copolyester elastomer fibers, or a combination thereof.

In another aspect, the invention further relates to a vehicle interior component comprising the recyclable skin of the present invention for the vehicle interior.

### BRIEF DESCRIPTION OF THE DRAWINGS

For a more complete understanding of the present invention, reference should now be made to the embodiments illustrated in greater detail in the drawings and described below by way of examples of the invention, wherein:
- FIGS. 1 to 10:: ten exemplary embodiments of the recyclable skin of the present invention;
- FIG. 11:: An exemplary embodiment of an automotive seat soft trim layer, wherein the automotive seat soft trim layer comprises the recyclable skin of the present invention;
- FIG. 12:: A comparative embodiment of conventional vehicle seat soft trim layer;
- FIG. 13:: An exemplary embodiment of an automotive interior soft trim layer comprising a recyclable skin of the present invention;
- FIG. 14:: A comparative embodiment of conventional automotive interior soft trim layers.

### DETAILED DESCRIPTION OF THE EMBODIMENTS

### General Definitions and Terminology

Unless otherwise noted, all publications, patent applications, patents, and other references mentioned herein are incorporated herein in their entirety by reference.

Unless otherwise defined, all technical and scientific terms used herein have the same meanings as those commonly understood by those skilled in the art to which the present invention pertains. In the event of any conflict, the definitions provided herein shall prevail.

Unless otherwise specified, all percentages, parts, proportions, etc. are by weight.

When a quantity, concentration, or other value or parameter is given as a range, a preferred range, or a preferred upper and lower value, or a specific value, it is to be understood as specifically disclosing all ranges formed from any upper range or preferred value and any lower range or preferred value, regardless of whether the range is individually disclosed. Unless otherwise specified, when referring to a numerical range herein, the specified range refers to including its endpoints, as well as integers and fractions within that range. The scope of the present invention is not limited to the specific values recited when defining a range. For example, "1 - 8" encompasses 1, 2, 3, 4, 5, 6, 7, 8, and any sub-range consisting of any two values, such as 2 - 6, 3 - 5.

The terms "about" and "approximately", when used in conjunction with a numerical variable, generally refer to the numerical value of that variable and all values of that variable within an experimental error (e.g. within a confidence interval of 95% of the average) or within ± 10%, or within a broader range of the specified numerical value.

The terms "include", "comprise", "have", "contain", or "involve" and other variations thereof herein, are inclusive or open-ended and do not exclude other unrecited elements or method steps. Those skilled in the art should understand that the above terms such as "include" encompass the meaning of "consist of". The expression "consisting of" excludes any unspecified element, step, or component not specified. The expression "consists essentially of" refers to elements, steps or components that are limited in the specified elements, steps or ingredients, plus optional basic and new features that do not materially affect the claimed subject matter. It should be understood that the expression "comprising" encompasses the expression "consisting essentially of" and "consisting of".

The term "selected from" refers to one or more elements in the group listed thereafter, independently selected, and may include a combination of two or more elements.

Where a numerical value or range end value is described herein, it is to be understood that the disclosed content includes the particular value or end value referenced.

As used herein, the term "one or more" or "at least one" refers to one, two, three, four, five, six, seven, eight, nine, or more.

Unless otherwise specified, the terms "combination thereof" and "mixture thereof" refer to a multi-component mixture of said elements, such as two, three, four, and up to a maximum possible number of components in a multi-component mixture.

Furthermore, where the number of components or parts of the present invention is not previously specified, it is understood that there is no limitation on the number of occurrences (or presence) of such components or parts. Therefore, it should be interpreted as including one or at least one, and the singular form of a component or part also includes the plural, unless the context clearly indicates the singular.

As used herein, the term "optional" or "optionally" means mean that the events or circumstances described below may or may not occur, and such description encompasses both the occurrence and non-occurrence of said events or circumstances.

When describing methods, components, or steps, the use of letters or numbers is for identification purposes only and does not limit the methods, components, or steps to the order or sequence indicated. A person skilled in the art may make reasonable adjustments.

In this document, "on one side of" or "located on one side of" is used solely to indicate the relative positional relationship between two layers and does not limit whether the two layers are directly adjacent.

Herein, thermoplastic copolyester elastomers (TPC) refer to polymers formed in hard segments (typically polyester chain segments) and soft segments (typically polyester or polyether chain segments). The hard segments in such polymers have a regular structure and can be separated into crystalline micro-regions, so that inter-molecular attraction between hard segment segments reaches a maximum value. These crystalline micro-regions induce a physical cross-linking of the amorphous elastomeric segments. When the temperature approaches the melting temperature of the crystallites, this type of material can still maintain its integrity, only starting to flow under higher temperature and shear stress during the thermoplastic processing.

Unless otherwise specified, the "molecular weight of the polymer" herein refers to the weight-average molecular weight of the polymer, which can be measured by conventional means in the art.

### Recyclable Skin for Vehicle Interiors

The recyclable skin for the vehicle interior of the present invention has a multilayer structure, and the structure of each layer (such as the material, hardness, thickness, relative positional relationship, etc. of each layer) contained in the recyclable skin of the present invention is reasonably designed, so that the recyclable skin of the present invention has excellent properties, is environmentally friendly, and is rich in application scenarios. For example, a skin may be used as a vehicle interior component, such as an instrument panel, a door panel, a center console, an armrest, or a seat.

The recyclable skin of the present invention is typically used inside a vehicle and can be used to cover interior components of a vehicle. In this document, it may also be referred to as "recyclable skin material."

The recyclable skin of the present invention may comprise a surface layer. The recyclable skin may comprise a coating located on one side of the surface layer. The recyclable skin may further comprise other layers, such as: a foam layer, a fabric layer, etc. located on a side of the surface layer facing away from the coating.

The recyclable skin is described in detail below.

### Surface Layer

The recyclable skin may comprise a surface layer. Suitable surface layers may impart desirable properties to the product, such as: suitable coloration, pleasant tactile feel, excellent mechanical strength and wear resistance, etc.

The surface layer may be formed from a material comprising a thermoplastic copolyester elastomer (TPC).

Thermoplastic copolyester elastomers are a class of recyclable thermoplastic materials that have excellent properties, such as superior mechanical strength, good tear resistance and wear resistance, chemical corrosion resistance, ease of processing, excellent resilience, and the like, suitable for use as covering materials for vehicle interior components.

Thermoplastic copolyester elastomers typically comprise hard segments (typically polyester segments) and soft segments (typically polyester segments or polyether segments). The "hard segment" and "soft segment" herein have the meaning as known to those skilled in the art. A "hard segment" refers to a repeatable, high - melting-point block in a block copolymer that is capable of crystallization. A "soft segment" refers to an amorphous block in the block copolymer having a relatively low glass transition temperature.

Suitable hard segments and soft segments in the thermoplastic copolyester elastomer can impart superior properties to the surface layer: such as tensile tear strength, comfort, soft touch, wear resistance, etc.

The hard segments of the thermoplastic copolyester elastomer forming the surface layer may comprise polybutylene terephthalate, polyethylene terephthalate, polytrimethylene terephthalate, poly(1,4-cyclohexanedimethylene terephthalate), polybutylene 2,6-naphthalate, polyxylylene terephthalate, polyethylene terephthalate/polybutylene terephthalate copolymer, dimethyl terephthalate/isophthalate/1,4-butanediol copolymer, polyethylene 2,5-furandicarboxylate, polytrimethylene 2,5-furandicarboxylate, polybutylene 2,5-furandicarboxylate, polyhexamethylene 2,5-furandicarboxylate, or combinations thereof. Preferably, the hard segments of the thermoplastic copolyester elastomer forming the surface layer can comprise polybutylene terephthalate, polybutylene 2,5-furandicarboxylate, or combinations thereof.

The soft segments of the thermoplastic copolyester elastomer forming the surface layer may comprise polyethylene glycol, polybutylene glycol, polycaprolactone, poly(methylethylene glycol), fatty acid dimer diol, polytetramethylene ether, ethylene oxide-propylene oxide copolymer bisphenol A ether, polypropylene glycol, polylactide, polyglycolide, or combinations thereof. Preferably, the soft segments of the thermoplastic copolyester elastomer forming the surface layer can comprise polyethylene glycol, polycaprolactone, polytetramethylene ether, or combinations thereof.

The proportion of soft segments and hard segments in the thermoplastic copolyester elastomer can be within a suitable range to impart good performance to the formed surface layer. In the thermoplastic copolyester elastomer, a molar ratio of the hard segments to the total copolyester elastomer ranges from 25% to 60%, preferably 30% to 40%; and a molar ratio of the soft segments to the total copolyester elastomer ranges from 40% to 75%, preferably 60% to 70%.

In the present invention, a higher molecular weight thermoplastic copolyester elastomer is preferably used to form the surface layer, which facilitates optimization of the surface properties. The thermoplastic copolyester elastomer may have a molecular weight of 20000 to 40000, preferably 30000 to 40000, more preferably 33000 to 38000.

The material forming the surface layer may consist essentially of a thermoplastic copolyester elastomer, for example, the content of the thermoplastic copolyester elastomer in the material forming the surface layer may be 80 wt % or more, preferably 85 wt % or more, more preferably 90 wt % or more. The material forming the surface layer may further comprise additives conventional in the art (including, but not limited to, colorants, antioxidants, etc.). It should be understood that the addition of additives is used to properly adjust the properties of the system, which generally should not be too high. In this application, the material forming the surface layer may not comprise a resin (for example, a compatible resin), which is beneficial to the overall recovery of the product. In one embodiment, the surface layer of the present invention may be formed from a thermoplastic copolyester elastomer by calendering and/or casting processes.

In order to balance the requirements for mechanical properties, tactile sensation, etc. in different use scenarios, the thickness, hardness, and density of the surface layer are reasonably designed according to the present disclosure, so that the surface layer can obtain better matching on the material and structure, so that better use performance can be obtained when the requirements of the vehicle are met.

The thickness of the surface layer of the present invention may be 0.1 to 1.5 mm, preferably 0.3 to 1 mm; more preferably 0.5 to 0.8 mm. If the thickness of the surface layer is too large, it may lead to an excessively high hardness of the skin, and the overall softness of the product is reduced, which may affect the tactile feeling and comfort of the product. In addition, the thickness of the skin is too large, and the amount of the material is increased, which may cause the product cost to rise; and the thickness of the surface layer is too small, which may cause the skin strength to be too low, and may be easily broken during use.

The hardness of the surface layer of the present disclosure may range from 20 to 60 Shore D. If the hardness of the surface layer is too high, it may cause the skin softness to be reduced, and the tactile feeling and comfort may be reduced. If the hardness of the surface layer is too low, it may cause the product to be difficult to form, and the product strength may be low.

The density of the surface layer may range from 1000 to 1200 kg/m3. If the density of the surface layer is too high, it may result in a heavy product, which is not conducive to lightweight design and cost reduction; at the same time, increased density may lead to higher surface hardness, affecting the product's feel and comfort. If the density of the surface layer is too low, the surface will not be dense enough, and the tensile strength and elongation at break will fail to meet requirements.

Appropriate processing techniques can be used to form a surface layer from materials containing thermoplastic copolyester elastomers. For overall recyclability and performance optimization, the surface layer material layer may not comprise a compatibilizing resin. Therefore, selecting an appropriate processing method is crucial for obtaining the surface layer of the present invention.

The present invention may employ a calendering or casting process. During the calendering process, the thermoplastic copolyester elastomer material is repeatedly subjected to extrusion and shearing by the shear force generated between rollers, thereby increasing its plasticity and extending it, on the basis of further plasticization, into a surface layer having the target thickness, density, and hardness. Compared to other processing methods (such as injection molding), the use of calendering helps to precisely regulate the density and hardness of the surface layer, thereby obtaining the target surface layer. Furthermore, under the premise of ensuring product quality, the injection molding process imposes certain limitations on the thickness of the skin obtained, and it is generally difficult to prepare a surface layer with a thickness below 0.8 mm. By employing the calendering or casting process to prepare the skin in the present application, a high-quality surface layer with a lower thickness can be obtained. A surface layer with a thickness of 0.5 mm or less can further be prepared and obtained via the calendering or casting process. The hardness of a skin obtained by injection molding is typically high, and it is relatively difficult to prepare a surface layer with a hardness below 50 Shore D through an injection molding process. In contrast, the surface layer employing the calendering or casting process in the present application can achieve a hardness below 40 Shore D.

Therefore, by employing the calendering or casting process to prepare the surface layer in the present application, the obtained surface layer can achieve a thinner and softer effect compared to other methods (such as injection molding), which in turn can render the final tactile feel of the overall product more excellent and more lightweight. In particular, for a skin having a light-transmission requirement, a product prepared by employing the calendering or casting process will be more advantageous.

Coating the surface of the surface layer with a suitable coating can impart excellent properties thereto, such as scratch resistance, wear resistance, light resistance, and anti-yellowing performance, thereby extending the service life of the product. The coating may be located on one side or both sides of the surface of the surface layer. Out of cost considerations, the coating may be provided on only one side of the surface of the surface layer, and during actual use, the coating is located on the side of the surface layer close to the user; that is, the user can touch or see the coated surface layer, so as to reduce the influence of external factors (such as light, scratches, etc.) on the product.

The coating of the present invention may be formed from a water-borne polyurethane system and/or an acrylic system. The water-borne polyurethane system usable in the present invention may comprise water, a water-borne polyurethane resin (which may comprise a matting resin and/or a gloss resin), and a curing agent (which may comprise a polycarbodiimide curing agent and/or an isocyanate curing agent). According to the desired tactile state of the skin, a certain amount of a feel-modifying agent, a leveling agent, a defoamer, a thickener, and the like may be appropriately added into the water-borne polyurethane system for adjustment. The coating formed by the water-borne polyurethane system can have good adhesion to the surface layer of the present invention. The acrylic system may comprise an acrylic surface treatment agent (for example, basic composition: water, a water-borne acrylic resin, and a curing agent; auxiliary formulation: a feel-modifying agent, a leveling agent, and a defoamer). In order to increase the adhesion between the coating and the surface layer, a curing crosslinking agent or a modified resin capable of reacting with surface active groups (for example, modified resins such as isocyanate-based curing crosslinking agents, modified water-borne polyurethane resins, and modified water-borne acrylate resins) may be added to the acrylic system. The coating formed by these systems has good adhesion to the surface layer, and the coating is not prone to falling off, which is beneficial for extending the service cycle and making the product more environmentally friendly.

The weight of the coating may account for 0.05% to 0.2% of the total weight of the recyclable skin. If the weight proportion of the coating is too high, the coating may adversely affect the overall recyclability of the product; if the weight proportion of the coating is too low, the surface performance cannot be fully optimized.

A suitable thickness of the coating can improve the performance of the product without destroying the overall recyclability of the product. The coating thickness may be 2 to 50 µm, preferably 10 to 30 µm, and more preferably 10 to 20 µm.

The colors of the surface layer and the coating can be adjusted according to application scenarios so as to impart a good visual experience to users.

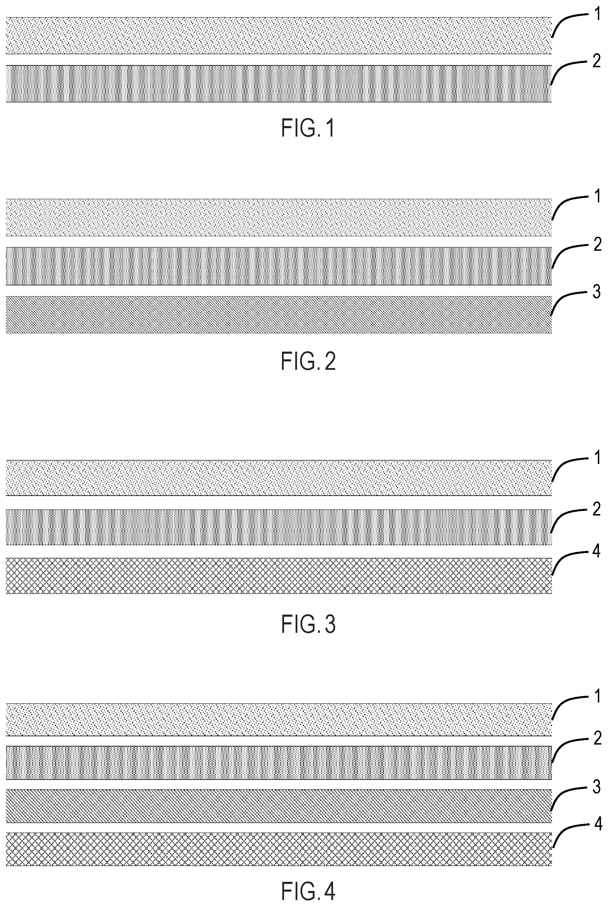

FIG. 1 illustrates an embodiment of a recyclable skin. The recyclable skin comprises a surface layer 2 and a coating 1 located on one side of the surface layer 2. The recyclable skin may be suitable for covering vehicle interior components such as an instrument panel, a door panel, and a center console.

### Foam layer

The recyclable skin may further comprise a foam layer, which may be located on one side of the surface layer. The foam layer may be formed by a foaming process from a material comprising a thermoplastic copolyester elastomer. In order to reduce the solvent residue that may be caused by chemical foaming, physical foaming may be employed.

A thermoplastic copolyester elastomer foam formed by a foaming process using a material containing thermoplastic copolyester elastomer exhibits good resilience and support, making it suitable for use as the foam layer of the present invention.

The thermoplastic copolyester elastomer of the foam layer comprises hard segments and soft segments. The hard segments of the thermoplastic copolyester elastomer forming the foam layer may comprise polybutylene terephthalate, polyethylene terephthalate, polytrimethylene terephthalate, poly(1,4-cyclohexanedimethylene terephthalate), polybutylene 2,6-naphthalate, polyxylylene terephthalate, polyethylene terephthalate/polybutylene terephthalate copolymer, dimethyl terephthalate/isophthalate/1,4-butanediol copolymer, polyethylene 2,5-furandicarboxylate, polytrimethylene 2,5-furandicarboxylate, polybutylene 2,5-furandicarboxylate, polyhexamethylene 2,5-furandicarboxylate, or combinations thereof; preferably comprises polybutylene terephthalate, polybutylene 2,5-furandicarboxylate, or combinations thereof. The soft segments of the thermoplastic copolyester elastomer forming the foam layer may comprise polyethylene glycol, polybutylene glycol, polycaprolactone, poly(methylethylene glycol), fatty acid dimer diol, polytetramethylene ether, ethylene oxide-propylene oxide copolymer bisphenol A ether, polypropylene glycol, polylactide, polyglycolide, or combinations thereof; preferably comprises polyethylene glycol, polycaprolactone, polytetramethylene ether, or combinations thereof.

In the thermoplastic copolyester elastomer forming the foam layer, the proportion and molecular weight of the soft segments and hard segments may be within suitable ranges so as to impart good performance to the foam layer. In the thermoplastic copolyester elastomer, the molar ratio range of the hard segments relative to the entire copolyester elastomer may be 30% to 60%, and the molar ratio range of the soft segments relative to the entire copolyester elastomer may be 40% to 70%. The molecular weight of the thermoplastic copolyester elastomer may be 30,000 to 45,000.

To meet the requirements of different application scenarios, the present invention employs a rational design of the foam layer based on the foam material, achieving an optimal combination of thickness, density, and material. This enables superior performance while meeting automotive regulatory standards.

The recyclable skin of the present invention may comprise a first foam layer. The thickness and density of the first foam layer can adjust the user's tactile experience. The thickness of the first foam layer may be 0.1 to 1 mm, preferably 0.3 to 0.8 mm, and more preferably 0.3 to 0.5 mm. If the thickness of the first foam layer is too high, it may lead to an excessively high overall thickness of the skin, affecting the wrapping property of edges and easily causing appearance problems such as wrinkles; at the same time, an excessively high thickness of the foam layer will increase the material consumption of the foaming layer, causing the overall weight of the surface layer to increase, which does not satisfy lightweight requirements. If the thickness of the first foam layer is too low, the soft-touch effect of the surface layer will be insufficiently pronounced, reducing the user's tactile perception of comfort and softness. The density of the first foam layer may be 100 to 300 kg/m³, preferably 150 to 200 kg/m³. If the density of the first foam layer is too high, it may cause the hardness of the foam layer to increase, rendering the soft-touch effect barely noticeable, and cause the weight of the foam layer to be too high, which does not satisfy lightweight requirements. If the density of the first foam layer is too low, it will cause insufficient support force of the foam layer during long-term use, making it prone to collapse. The first foam layer of the present invention can enhance the soft touch when a user initially comes into contact with the multilayer material, improve the softness felt when the user touches it, impart a good experience to the user, and enrich product application scenarios.

FIG. 2 illustrates one embodiment of a recyclable skin. The recyclable skin comprises a coating 1, a surface layer 2 and a first foam layer 3, wherein the first foam layer 3 and the coating 1 are respectively located on two sides of the surface layer 2. The first foam layer 3 present in the recyclable skin can bring a better surface tactile feeling to the user, and a softer and more comfortable user experience. A vehicle interior component, such as a door panel, an instrument panel, a center console, etc. may be applied.

The recyclable skin may further comprise a second foam layer. Incorporating a second foam layer into the recyclable skin can further enhance the soft touch experienced by users during seating. A recyclable skin comprising the second foam layer is particularly suitable for vehicle applications where a certain level of softness is required, such as seat cushions and backrests, as it can increase the softness of these components and enhance user comfort.

The second foam layer may be a thermoplastic copolyester elastomer foam having a sheet-like structure, so that compared to the first foam layer, the cell structure of the second foam layer can be more open, thereby imparting a softer feel to the product.

In order to increase the softness of the product, the second foam layer has a relatively higher thickness and a lower density compared to the first foam layer. The thickness of the second foam layer may be 1 to 10 mm, preferably 3 to 6 mm. The density of the second foam layer may be 50 to 150 kg/m³, preferably 70 to 100 kg/m³.

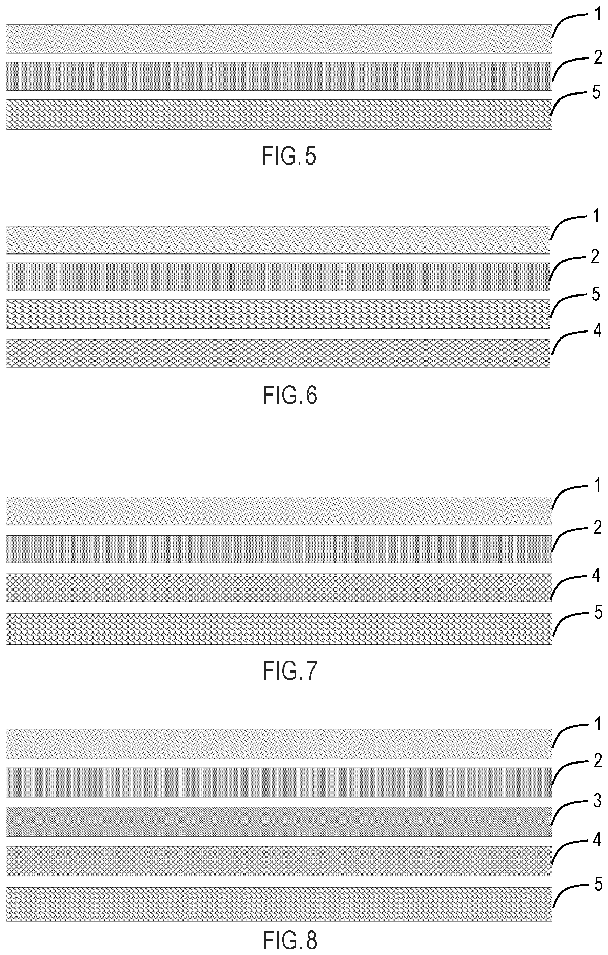

FIG. 5 illustrates one embodiment of a recyclable skin. The recyclable skin comprises a coating 1, a surface layer 2 and a second foam layer 5, wherein the second foam layer 5 and the coating 1 are respectively located on opposite sides of the surface layer 2. The second foam layer 5 present in the recyclable skin can render the soft-touch effect of the product more pronounced. It is particularly suitable for covering vehicle interior components such as seat and armrest regions.

### Fabric Layer

The recyclable skin may further comprise a fabric layer. The main function of providing the fabric layer lies in increasing the overall strength of the recyclable skin and reducing its stretchability.

The material of the fabric layer may be selected from fibers formed from the same type of polymer material as the surface layer and the foam layer (i.e., a polyester material) to facilitate overall recycling of the recyclable skin after its service life expires. The fibers formed from the thermoplastic polyester material may be thermoplastic polyester fibers, thermoplastic copolyester elastomer fibers, or a combination thereof.

Usable thermoplastic polyester fibers comprise polybutylene terephthalate fibers, polyethylene terephthalate fibers, polytrimethylene terephthalate fibers, or a combination thereof. The fabric layer formed from polybutylene terephthalate fibers has superior performance (such as wear resistance, strength, and tensile properties).

The fabric layer may further be prepared from thermoplastic copolyester elastomer fibers, wherein the thermoplastic copolyester elastomer comprises hard segments and soft segments. The hard segments may comprise polybutylene terephthalate, polyethylene terephthalate, polytrimethylene terephthalate, poly(1,4-cyclohexanedimethylene terephthalate), polybutylene 2,6-naphthalate, polyxylylene terephthalate, polyethylene terephthalate/polybutylene terephthalate copolymer, dimethyl terephthalate/isophthalate/1,4-butanediol copolymer, polyethylene 2,5-furandicarboxylate, polytrimethylene 2,5-furandicarboxylate, polybutylene 2,5-furandicarboxylate, polyhexamethylene 2,5-furandicarboxylate, or combinations thereof; preferably comprise polybutylene terephthalate, polybutylene 2,5-furandicarboxylate, or combinations thereof. The soft segments may comprise polyethylene glycol, polybutylene glycol, polycaprolactone, poly(methylethylene glycol), fatty acid dimer diol, polytetramethylene ether, ethylene oxide-propylene oxide copolymer bisphenol A ether, polypropylene glycol, polylactide, polyglycolide, or combinations thereof; preferably comprise polyethylene glycol, polycaprolactone, polytetramethylene ether, or combinations thereof.

The fabric layer may be in the form of a woven or non-woven fabric. The fabric layer may be a polyester fiber cloth, preferably comprising a thermoplastic copolyester elastomer fiber cloth and/or a polybutylene terephthalate fiber cloth. The fabric layer may impart good performance to the recyclable skin.

The fabric layer of the present invention has a suitable thickness, fabric density, and tensile strength, so that on the premise of satisfying automotive regulatory standards, properties such as the tensile performance and strength of the recyclable skin can be further improved.

The thickness of the fabric layer may be 0.1 to 1 mm, preferably 0.3 to 0.8 mm, and more preferably 0.3 to 0.5 mm. If the fabric layer is too thick, it can result in excessive hardness of the skin, which compromises the softness and feel of the skin material. Furthermore, an excessively thick fabric layer impairs the light transmission of the skin, if such transmission is required. An excessively thin fabric layer results in insufficient material strength, causing the skin to tear easily when stretched and to rip or tear easily during sewing.

The mass per unit area of the fabric layer may be 15 to 150 g/m². If the mass per unit area of the fabric layer is too high, the fabric layer may be too dense, increasing hardness and negatively affecting the feel, as well as increasing weight, which does not satisfy lightweight requirements; furthermore, if the fabric layer is too dense, the light-transmission requirement cannot be met. Conversely, a weight per unit area that is too low results in insufficient strength of the fabric layer, which can be easily stretched and whose alignment is difficult to control.

The fabric layer has a suitable material, thickness, and mass per unit area, so that it has a high tensile strength, thereby improving product performance. The tensile strength of the fabric layer of the present invention may be 100 N or more.

According to application scenarios, the skin of the present invention may comprise one or more fabric layers, and through matching with other various layers, more excellent product performance is obtained.

FIG. 3 illustrates an embodiment of the recyclable skin. The recyclable skin comprises a coating 1, a surface layer 2, and a fabric layer 4, wherein the fabric layer 4 and the coating 1 are respectively located on opposite sides of the surface layer 2. The fabric layer 4 present in the recyclable skin can render the tensile properties and strength of the product more excellent. It can be applied to cover vehicle interior components such as a door panel, an instrument panel, and a center console.

In the recyclable skin of the present invention, the fabric layer and the foam layer may be used in combination, such that the product maintains a surface soft-touch effect while increasing the tensile properties and strength of the product.

The recyclable skin of the present invention may comprise a surface layer, a coating, a foam layer, and a fabric layer, wherein both the foam layer and the fabric layer are located on the side of the surface layer facing away from the coating. The foam layer may be located between the surface layer and the fabric layer. This type of recyclable skin is particularly suitable for use in vehicle seats (such as seat backrests and seat cushions).

FIG. 4 illustrates an embodiment of the recyclable skin. The recyclable skin comprises a coating 1, a surface layer 2, a first foam layer 3, and a fabric layer 4, wherein both the first foam layer 3 and the fabric layer 4 are located on the side of the surface layer facing away from the coating 1, and the first foam layer 3 is located between the surface layer 2 and the fabric layer 4. The recyclable skin is suitable for covering vehicle interior components such as a door panel, an instrument panel, and a center console.

FIG. 6 illustrates an embodiment of the recyclable skin. The recyclable skin comprises a coating 1, a surface layer 2, a second foam layer 5, and a fabric layer 4, wherein both the second foam layer 5 and the fabric layer 4 are located on the side of the surface layer facing away from the coating 1, and the second foam layer 5 is located between the surface layer 2 and the fabric layer 4. The recyclable skin is suitable for covering vehicle interior components such as an armrest and a seat.

FIG. 7 illustrates an embodiment of the recyclable skin. The recyclable skin comprises a coating 1, a surface layer 2, a second foam layer 5, and a fabric layer 4, wherein both the second foam layer 5 and the fabric layer 4 are located on the side of the surface layer facing away from the coating 1, and the fabric layer 4 is located between the surface layer 2 and the second foam layer 5. In application scenarios of the recyclable skin, generally speaking, the region contacted or observed by a user is the surface layer coated with the coating. Since the fabric layer 4 is adjacent to the surface layer 2, it can render the user contact region firmer and smoother, providing a better visual effect. The recyclable skin is suitable for covering vehicle interior components such as an armrest and a seat.

The recyclable skin may simultaneously comprise a surface layer, a coating, a first foam layer, a second foam layer, and a fabric layer, wherein the first foam layer, the second foam layer, and the fabric layer are all located on the side of the surface layer facing away from the coating. The first foam layer may be located between the surface layer and the fabric layer. The fabric layer may be located between the surface layer and the second foam layer.

FIG. 8 illustrates an embodiment of the recyclable skin. The recyclable skin comprises, in sequence, a coating 1, a surface layer 2, a first foam layer 3, a fabric layer 4, and a second foam layer 5. The presence of the first foam layer 3 and the second foam layer 5 renders the touch of the recyclable skin softer, and comfort is further increased. The recyclable skin is suitable for covering vehicle interior components such as an armrest and a seat.

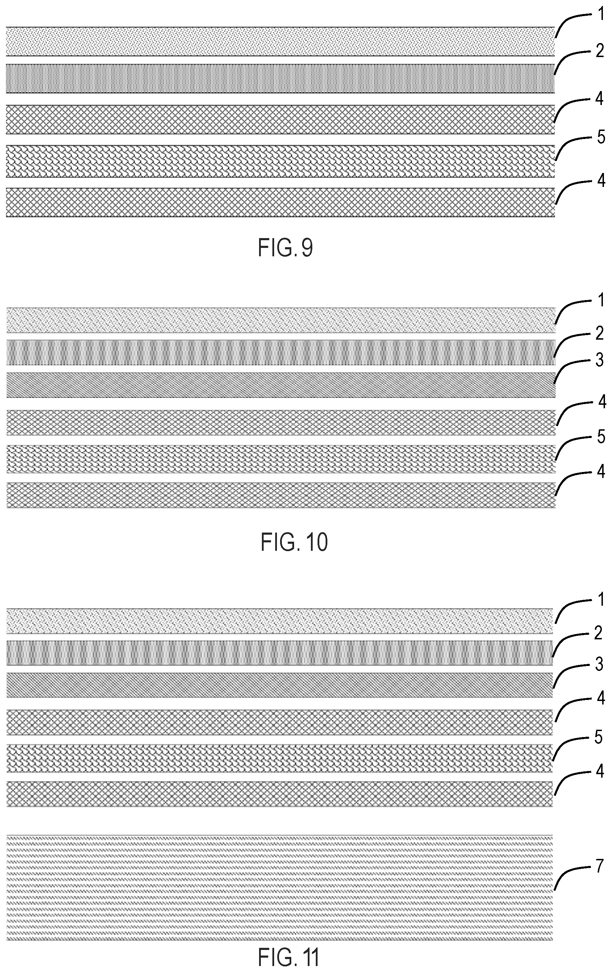

FIG. 9 illustrates an embodiment of the recyclable skin. The recyclable skin comprises, in sequence, a coating 1, a surface layer 2, a fabric layer 4, a second foam layer 5, and a fabric layer 4. The fabric layers 4 are respectively located at positions adjacent to the surface layer 2 and the second foam layer 5. Such an arrangement can render the user contact region firmer and smoother, while increasing the overall tensile strength and wear resistance of the product. The recyclable skin is suitable for covering vehicle interior components such as an armrest and a seat.

FIG. 10 illustrates an embodiment of the recyclable skin. The recyclable skin comprises, in sequence, a coating 1, a surface layer 2, a first foam layer 3, a fabric layer 4, a second foam layer 5, and a fabric layer 4. The recyclable skin is soft and comfortable in terms of overall touch, and has good overall tensile strength and wear resistance. The recyclable skin is suitable for covering vehicle interior components such as an armrest and a seat.

Based on the consideration of overall recycling, the materials of the respective layers in the recyclable skin of the present invention are all selected from polyester materials to facilitate overall recycling. In one embodiment, based on the total weight of the recyclable skin, the content of the thermoplastic polyester material in the recyclable skin is 70% or more, preferably 85% or more, and more preferably 90% or more. In another embodiment, based on the total weight of the recyclable skin, the content of the thermoplastic copolyester elastomer in the recyclable skin is 60% or more, preferably 85% or more, and more preferably 90% or more. If the content of the thermoplastic polyester or the thermoplastic copolyester elastomer in the skin is too low, the purpose of overall recycling cannot be achieved.

The materials of the respective layers may be selected from the same or different specific polyester types. In order to improve the reuse efficiency of the recyclable skin, the materials of the respective layers in the recyclable skin can have the same or similar polyester types as much as possible. After the service life of the product expires, the recyclable skin can be directly recycled as a whole without dismantling, and the recycled material consists essentially of a single polymer class.

In one embodiment, the type of the hard segments in the thermoplastic copolyester elastomer foam constituting the foam layer (the first and/or second foam layer) is the same as the type of the hard segments of the thermoplastic copolyester elastomer constituting the surface layer. That is, the thermoplastic copolyester elastomer forming the foam layer by foaming and the thermoplastic copolyester elastomer forming the surface layer have the same repeating unit structure in their hard segments. In one embodiment, the soft segments of the thermoplastic copolyester elastomer foam constituting the foam layer (the first and/or second foam layer) are of the same type as the soft segments of the thermoplastic copolyester elastomer constituting the surface layer. That is, the thermoplastic copolyester elastomer forming the foam layer by foaming and the thermoplastic copolyester elastomer forming the surface layer have the same repeating unit structure in their soft segments.

In one embodiment, the hard segments of the thermoplastic copolyester elastomer constituting the surface layer are polybutylene terephthalate or polybutylene 2,5-furandicarboxylate. The soft segments of the thermoplastic copolyester elastomer constituting the surface layer are polytetramethylene ether or polycaprolactone. The hard segments of the thermoplastic copolyester elastomer foam (the material of the first foam layer and/or the second foam layer) are polybutylene terephthalate or polyethylene terephthalate, preferably polybutylene terephthalate. The soft segments of the thermoplastic copolyester elastomer foam are polyester segments or polyether segments. The fabric layer is a polybutylene terephthalate fiber cloth.

Polybutylene terephthalate-based materials have rich material forms and can be used as the materials for the respective layers in the recyclable skin. Specifically, a thermoplastic copolyester elastomer having polybutylene terephthalate as hard segments has excellent mechanical strength, elasticity, and corrosion resistance. Through a calendering or casting method, the thermoplastic copolyester elastomer can be made into a surface layer that meets automotive regulatory standards and has good performance. A foam formed by foaming a thermoplastic copolyester elastomer containing polybutylene terephthalate hard segments has good resilience and suitable hardness. A fiber cloth formed from polybutylene terephthalate fibers is excellent in wear resistance, strength, and tensile properties. Therefore, selecting polybutylene terephthalate as the constituent material of each layer can reduce the number of polyester types introduced into the recyclable skin, thereby being beneficial to improving reuse efficiency and reducing the operational difficulty of recycling (such as physical recycling methods and chemical recycling methods). It can further ensure that the recyclable skin has excellent performance during use, such as excellent strength, tensile properties, and elasticity, which can meet the requirements for use in vehicle interior components.

Compared with skin products obtained from other conventional recyclable materials using a single type of material, the product of the present application has disadvantages in certain aspects, for example:
For polyolefin materials, it is difficult to achieve a hardness of less than 75 Shore A while meeting automotive regulatory standards. As a result, such materials cannot satisfy requirements for applications requiring a soft skin. Moreover, the inventors have found that a foam layer prepared from polyolefin materials cannot achieve the resilience of the foam layer of the present invention; when polyolefin materials are used as a fabric layer, their tensile strength is also lower than that of the fabric layer of the present invention, and thus cannot satisfy high-end automotive regulatory standards.

For thermoplastic polyurethane elastomer materials (TPU), conventional aromatic polyurethane elastomers are prone to yellowing under light exposure. If used for light-colored interiors, they cannot satisfy automotive regulatory standards. On the other hand, aliphatic polyurethane elastomers generally have a relatively high price, which does not satisfy low-cost requirements; moreover, it is difficult for aliphatic polyurethane elastomers to achieve low hardness, rendering them unable to satisfy the requirements for a soft skin.

For thermoplastic polystyrene elastomers (SBS-based elastomers), diene bonds exist in their structure, making them prone to aging and resulting in poor heat resistance, which makes it difficult to satisfy automotive regulatory standards. In contrast, the hard segments of the thermoplastic copolyester elastomer used in the present application have a high melting point and polarity, and thus the heat resistance and oil resistance thereof are superior to those of SBS-based elastomers.

For thermoplastic vulcanizate elastomers (TPV), sulfur bonds exist in their structure, and their odor at high temperatures cannot satisfy automotive regulatory standards, so they do not possess an advantage.

For thermoplastic polyamide elastomers, their performance is close to that of thermoplastic copolyester elastomers, but their price is relatively high, which is disadvantageous for market application.

### Vehicle Interior Component Comprising Recyclable Skin

The recyclable skin of the present invention has rich application scenarios and can be used as a covering material for vehicle interior components. For example, it can be used in fields such as instrument panels, door panels, center consoles, armrests, and seats of vehicles. The coating of the recyclable skin is located on the side of the surface layer close to the user; that is, the user can touch or see the surface layer provided with the coating.

In one embodiment, an automotive seat comprises the recyclable skin of the present invention. FIG. 11 illustrates an embodiment of a soft trim layer of an automotive seat. The recyclable skin comprising the coating 1, the surface layer 2, the first foam layer 3, the fabric layer 4, and the second foam layer 5 is wrapped together with a seat cushion (or backrest) 7 to constitute the soft trim layer of the automotive seat. Wrapping the recyclable skin with the seat cushion or backrest 7 can be performed by means of sewing. The sewing thread may be selected from polyester fiber sewing threads, such as polybutylene terephthalate fiber sewing threads. After the surface layer and the seat cushion (or backrest) are combined together through wrapping, they can be combined with a frame through engagement with a profile strip, and the profile strip used for engagement may be an injection-molded or extrusion-molded thermoplastic copolyester elastomer. After the service life of this product expires, the frame and the soft trim layer can be dismantled and separated, and the soft trim layer (which comprises the recyclable skin and the seat cushion [or backrest] ) can be recycled as a whole.

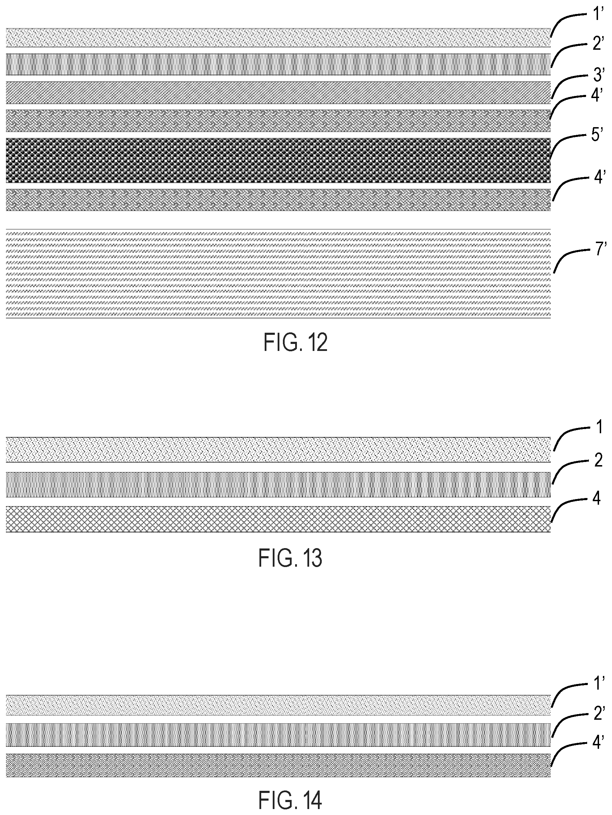

In one embodiment, an automotive interior trim part comprises the recyclable skin of the present invention. FIG. 13 illustrates an embodiment of a soft trim layer of an automotive interior trim part. The soft trim layer of the interior trim part is a recyclable skin comprising a coating 1, a surface layer 2, and a fabric layer 4. The soft trim layer can be laminated onto a frame via a thermoplastic polyester adhesive. After the service life of this product expires, after separating the frame from the soft trim layer, the soft trim layer of the interior trim part (i.e., the recyclable skin) can be recycled and reused as a whole.

Recycling of the soft trim layer can be performed by means of physical recycling or chemical recycling. A feasible route for physical recycling is as follows: after dismantling the soft trim layer comprising the recyclable skin of the present invention from the vehicle interior component, without layer-by-layer separation, directly subjecting it as a whole to physical pulverization to recover powder, and then the powder can be extruded and granulated through a twin-screw extruder to obtain recycled thermoplastic polyester pellets, wherein the recycled pellets can be used to re-prepare a recyclable skin, or applied to other fields related to polyester. A feasible route for chemical recycling is as follows: after dismantling the soft trim layer comprising the recyclable skin of the present invention, corresponding monomers can be obtained through alkali dissolution and fractional distillation, and the monomers are polymerized to obtain corresponding polymer materials.

### BENEFICIAL EFFECTS

The recyclable skin of the present invention has a multilayer structure. By rationally designing the structure of each layer (such as the material, hardness, thickness, and relative positional relationship of each layer), it is endowed with excellent performance, making it environmentally friendly and suitable for a wide range of applications. The present invention can satisfy the requirements of different application scenarios through the recyclable skin. The present invention creatively selects the same materials of the same type for each layer of the recyclable skin, which facilitates overall recycling after the service life expires.

### Embodiments

The solutions of the present invention are described in further detail below in conjunction with specific embodiments.

It should be noted that the following embodiments are merely examples given to clearly explain the technical solutions of the present invention, and are not intended to limit the present invention. For a person of ordinary skill in the art, other changes or variations in different forms can be made on the basis of the above description. There is no need and it is impossible to exhaustively list all implementation modes here, and the obvious changes or variations derived therefrom still fall within the scope of protection of the present invention.

### Example 1

The structure of the soft trim layer of an automotive seat of Example 1 is shown in FIG. 11. It comprises, in sequence:
a coating 1, formed from a water-borne polyurethane coating system (which comprises water, a water-borne polyurethane matting resin, and a carbodiimide curing agent), with a coating thickness of 20 µm;
a surface layer 2, which is a thermoplastic copolyester elastomer A, wherein its hard segments are polybutylene terephthalate, and its soft segments are polytetramethylene ether; the molar ratio of the hard segments relative to the thermoplastic copolyester elastomer A is 30%, and the molar ratio of the soft segments relative to the thermoplastic copolyester elastomer A is 70%; the molecular weight range is 33,000 to 35,000, the thickness of the surface layer is 0.3 mm, the hardness is 20 Shore D, and the density of the surface layer is 1,000 kg/m³;
a first foam layer 3, which is a thermoplastic copolyester elastomer foam, wherein its hard segments are polybutylene terephthalate, and its soft segments are polyethylene glycol; the molar ratio of the hard segments relative to the thermoplastic copolyester elastomer is 35%, and the molar ratio of the soft segments relative to the thermoplastic copolyester elastomer is 65%; the molecular weight range is 30,000 to 45,000, the thickness of the foam layer is 0.5 mm, and the density of the foam layer is 100 kg/m³;
a fabric layer 4, which is a polybutylene terephthalate fiber cloth, with a thickness of 0.3 mm and a mass per unit area of 15 g/m²;
a second foam layer 5, which is a thermoplastic copolyester elastomer foam, wherein the hard segments thereof are polyethylene terephthalate, and the soft segments thereof are polyethylene glycol; the molar ratio of the hard segments relative to the thermoplastic copolyester elastomer is 25%, and the molar ratio of the soft segments relative to the thermoplastic copolyester elastomer is 75%; the molecular weight range is 30,000 to 40,000, the thickness of the foam layer is 3 mm, and the density of the foam layer is 50 kg/m³;
a fabric layer 4, which is a polybutylene terephthalate fiber cloth, with a thickness of 0.8 mm and a mass per unit area of 100 g/m²; and
a seat cushion 7 (or backrest 7), which is a thermoplastic copolyester elastomer foam.

### Comparative Example 1

The structure of the soft trim layer of the automotive seat of Comparative Example 1 is shown in FIG. 12. It comprises, in sequence: a conventional coating 1', a conventional PVC/PU surface layer 2', a conventional PU foam layer 3', a conventional PET fabric layer 4', a conventional PUR foam layer 5', a conventional PET fabric layer 6', and a conventional PUR foam seat cushion 7' (or backrest 7').

### Example 2

The structure of the soft trim layer of an automotive interior trim part of Example 2 is shown in FIG. 13. It comprises, in sequence:
a coating 1, formed from a water-borne polyacrylic coating system (which comprises water, a water-borne acrylic resin, a modified curing agent, a leveling agent, etc.), with a coating thickness of 30 µm;
a surface layer 2, which is a thermoplastic copolyester elastomer B, wherein the hard segments thereof are polybutylene 2,5-furandicarboxylate, and the soft segments thereof are polycaprolactone; the molar ratio of the hard segments relative to the thermoplastic copolyester elastomer B is 40%, and the molar ratio of the soft segments relative to the thermoplastic copolyester elastomer B is 60%; the molecular weight range is 25,000 to 35,000, the thickness of the surface layer is 0.5 mm, the hardness is 40 Shore D, and the density of the surface layer is 1,100 kg/m³; and
a fabric layer 4, which is a polybutylene terephthalate fiber cloth, with a thickness of 1 mm and a mass per unit area of 70 g/m².

### Comparative Example 2

The structure of the soft trim layer of the automotive interior trim part of Comparative Example 2 is shown in FIG. 14. It comprises, in sequence: a conventional coating 1', a conventional PVC/PU surface layer 2', and a conventional PET fabric layer 4'.

Table 1 below shows the relevant comparative data of the Examples and the Comparative Examples.

**TABLE 1**

| | Product Type | Contains Non-Recyclable Materials? | Recycling Method | Recycling Efficiency |
|---|---|---|---|---|
| Example 1 | Vehicle Seat Soft Trim Layer | No | No layering separation required, whole recycling | High |
| Comparative Example 1 | | Yes | Requires layering separation before recycling recyclable parts | Low |
| Example 2 | Vehicle Interior Trim Soft Trim Layer | No | No layering separation required, whole recycling | High |
| Comparative Example 2 | | Yes | Requires layering separation before recycling recyclable parts | Low |

According to Table 1, the recyclable skin of the present invention has rich application scenarios, can be used for a soft trim layer of a vehicle seat or an interior trim part, and can satisfy the use requirements of different application scenarios.

Examples 1 and 2 do not contain non-recyclable materials, and the materials of the respective layers are unified. After the service life expires, there is no need to separate the respective layers, and the recyclable skin can be recycled as a whole, which makes the recycling operation convenient and results in high recycling efficiency. In contrast, Comparative Examples 1 and 2 contain non-recyclable materials. Therefore, if they need to be recycled, it is necessary to separate them layer by layer first, and then recycle the recyclable parts therein. Due to the complex operations in this separation process, the recycling operation steps are increased, resulting in low recycling efficiency.

### Performance

According to the following methods, the recyclable skins of Examples 1 and 2 of the present application are tested, and the results are shown in Table 2:
Tensile strength: the test standards and methods refer to ISO 13934;
Tear strength: the test standards and methods refer to ISO 13937;
Heat aging: test instrument: environmental chamber; test method: evaluating and observing the product after storing it in an environment at 120°C for 168 hours;
Color fastness to rubbing: the test standards and methods refer to ISO 11640;
Flame retardancy: the test standards and methods refer to GB 8410.

According to Table 2 below, it can be seen that the recyclable skin of the present invention has excellent performance and can comply with automotive regulatory standards.

**TABLE 2**

| Test Item | Qualification Standard | Test Result |
|---|---|---|
| Tensile strength | ≥200 N | Conforms |
| Tear Strength | ≥20 N | Conforms |
| Heat Aging | No cracks, no significant color change, no interlayer separation | Conforms |
| Color fastness to rubbing | ≥ Grade 4 | Conforms |
| Flame Retardancy | ≤100 mm/min | Conforms |

Compared with skins prepared from other thermoplastic elastomer materials, the skin using the thermoplastic copolyester elastomer of the present application has superior comprehensive performance, as shown in Table 3 below:

**TABLE 3**

| | | | | | | | |
|---|---|---|---|---|---|---|---|
| Property | TPC | Aliphatic TPU | Aromatic TPU | TPS | TPV | TPA | TPO |
| Odor | None | None | None | Moderate | Noticeable | None | None |
| Heat resistance | Excellent | Excellent | Excellent | Poor | Medium | Excellent | Medium |
| Yellowing & aging resistance | Excellent | Poor | Excellent | Poor | Medium | Excellent | Medium |
| Minimum achievable hardness^{a} | Low | Low | Medium | High | High | Low | High |
| Cost | Medium | Medium | High | Low | Medium | High | High |
| Overall assessment | Excellent | Medium | Medium | Poor | Medium | Medium | Medium |

| | | | | | | | |
|---|---|---|---|---|---|---|---|
| • TPC: Thermoplastic copolyester elastomer; • TPU: Thermoplastic Polyurethane Elastomer; • TPS: Thermoplastic Polystyrene Elastomer; • TPV: Thermoplastic Vulcanizate Elastomer; • TPA: Thermoplastic Polyamide Elastomer; • TPO: Thermoplastic Polyolefin Elastomer. • "None" in the Odor row means "No unpleasant odor". | | | | | | | |

Achievable minimum hardness a: refers to the minimum hardness that the product can achieve on the premise of satisfying automotive regulatory standards.

It is clear to those skilled in the art that many modifications and variations of the present invention can be made without departing from the spirit and scope thereof. The specific embodiments described herein are provided by way of example only and are not meant to be limiting in any way. The true scope and spirit of the present invention are indicated by the appended claims, and the description and examples are merely exemplary.

## Claims

1. A recyclable skin for a vehicle interior,
wherein the recyclable skin comprises a multilayer structure comprising a surface layer, wherein the surface layer is formed from a material comprising a thermoplastic copolyester elastomer by a calendering and/or casting process, wherein:
- the thermoplastic copolyester elastomer comprises hard segments and soft segments;
- the hard segments comprise polybutylene terephthalate, polyethylene terephthalate, polytrimethylene terephthalate, poly(1,4-cyclohexanedimethylene terephthalate), polybutylene 2,6-naphthalate, polyxylylene terephthalate, polyethylene terephthalate/polybutylene terephthalate copolymer, dimethyl terephthalate/isophthalate/1,4-butanediol copolymer, polyethylene 2,5-furandicarboxylate, polytrimethylene 2,5-furandicarboxylate, polybutylene 2,5-furandicarboxylate, polyhexamethylene 2,5-furandicarboxylate, or a combination thereof; preferably comprising polybutylene terephthalate, polybutylene 2,5-furandicarboxylate, or a combination thereof;
- the soft segments comprise polyethylene glycol, polybutylene glycol, polycaprolactone, poly(methylethylene glycol), fatty acid dimer diol, polytetramethylene ether, ethylene oxide-propylene oxide copolymer bisphenol A ether, polypropylene glycol, polylactide, polyglycolide, or a combination thereof; preferably comprising polyethylene glycol, polycaprolactone, polytetramethylene ether, or a combination thereof.

2. The recyclable skin according to claim 1, wherein:
- the surface layer has a thickness of 0.1 to 1.5 mm, preferably 0.3 to 1 mm, and more preferably 0.5 to 0.8 mm; and/or
- the surface layer has a Shore D hardness of 20 to 60; and/or
- the surface layer has a density of 1000 to 1200 kg/m³.

3. The recyclable skin according to claim 1, wherein:
- in the thermoplastic copolyester elastomer forming the surface layer, the molar ratio of hard segments in the thermoplastic copolyester elastomer is 25% to 60%, preferably 30% to 40%; and/or
- in the thermoplastic copolyester elastomer forming the surface layer, the molar ratio of soft segments in the thermoplastic copolyester elastomer is 40% to 75%, preferably 60% to 70%.

4. The recyclable skin according to claim 1, wherein:
- the surface layer comprises a coating on its surface, wherein the coating comprises a water-borne polyurethane system and/or an acrylic system,
wherein:
- the weight of the coating is 0.05% to 0.2% of the total weight of the recyclable skin; and/or
- the thickness of the coating is 2 to 50 µm, preferably 10 to 30 µm, and more preferably 10 to 20 µm.

5. The recyclable skin according to claim 1,
wherein the recyclable skin further comprises a foam layer; wherein the foam layer is formed by a foaming process from a material comprising a thermoplastic copolyester elastomer.

6. The recyclable skin according to claim 5, wherein the foam layer comprises a first foam layer and/or a second foam layer; wherein:
- the thickness of the first foam layer is 0.1 to 1 mm, preferably 0.3 to 0.8 mm, and more preferably 0.3 to 0.5 mm; and/or
- the density of the first foam layer is 100 to 300 kg/m³, preferably 150 to 200 kg/m³; and/or
- the thickness of the second foam layer is 1 to 10 mm, preferably 3 to 6 mm; and/or
- the density of the second foam layer is 50 to 150 kg/m³, preferably 70 to 100 kg/m³.

7. The recyclable skin according to any one of claims 1 to 6, wherein
- the recyclable skin further comprises a fabric layer,
wherein the fabric layer is made of fibers formed from a thermoplastic polyester material comprising thermoplastic polyester fibers, thermoplastic copolyester elastomer fibers, or a combination thereof.

8. The recyclable skin according to claim 7,
wherein the fabric layer comprises a polybutylene terephthalate fiber fabric, a thermoplastic copolyester elastomer fiber fabric, or a combination thereof.

9. The recyclable skin according to claim 7, wherein:
- the thickness of the fabric layer is 0.1 to 1 mm, preferably 0.3 to 0.8 mm, and more preferably 0.3 to 0.5 mm; and/or
- the mass per unit area of the fabric layer is 15 to 150 g/m²; and/or
- the tensile strength of the fabric layer is 100 N or more.

10. The recyclable skin according to any one of claims 1 to 6, wherein:
- based on the total weight of the recyclable skin, the content of thermoplastic polyester material in the recyclable skin is 70% or more, preferably 85% or more; and/or
- based on the total weight of the recyclable skin, the content of thermoplastic copolyester elastomer in the recyclable skin is 60% or more, preferably 85% or more.

11. The recyclable skin according to claim 7, wherein:
- based on the total weight of the recyclable skin, the content of thermoplastic polyester material in the recyclable skin is 70% or more, preferably 85% or more; and/or
- based on the total weight of the recyclable skin, the content of thermoplastic copolyester elastomer in the recyclable skin is 60% or more, preferably 85% or more.

12. The recyclable skin according to claim 7, wherein:
- the recyclable skin comprises the surface layer, the fabric layer, and the first foam layer;
- the fabric layer and the first foam layer being located on the same side of the surface layer, with the first foam layer located between the surface layer and the fabric layer.

13. The recyclable skin according to claim 7, wherein:
- the recyclable skin comprises the surface layer, the fabric layer, and the second foam layer;
- the fabric layer and the second foam layer being located on the same side of the surface layer, with the second foam layer located between the surface layer and the fabric layer.

14. The recyclable skin according to claim 7, wherein:
- the recyclable skin comprises the surface layer, the fabric layer, and the second foam layer;
- the fabric layer and the second foam layer being located on the same side of the surface layer, with the fabric layer located between the surface layer and the second foam layer.

15. The recyclable skin according to claim 7, wherein:
- the recyclable skin comprises the surface layer, the fabric layer, the first foam layer, and the second foam layer;
- the fabric layer, the first foam layer, and the second foam layer being located on the same side of the surface layer;
wherein:
- the first foam layer is located between the surface layer and the fabric layer, and
- the fabric layer is located between the surface layer and the second foam layer.

16. The recyclable skin according to claim 14 or 15,
wherein an additional fabric layer is provided on a side of the second foam layer facing away from the surface layer.

17. A vehicle interior component, comprising the recyclable skin for a vehicle interior according to any one of claims 1 to 16, preferably, the vehicle interior component comprises: an instrument panel, a door panel, a center console, an armrest, or a seat.
